Europäisches Patentamt

European Patent Office

Office européen des brevets

(19)

(11) Veröffentlichungsnummer: **0 056 097**
A2

(12) **EUROPÄISCHE PATENTANMELDUNG**

(21) Anmeldenummer: 81109172.7

(22) Anmeldetag: 29.10.81

(51) Int. Cl.³: **B 60 M 1/20,** B 60 M 1/13

(30) Priorität: 20.12.80 DE 3048238

(43) Veröffentlichungstag der Anmeldung: 21.07.82
Patentblatt 82/29

(84) Benannte Vertragsstaaten: **AT BE CH DE FR GB NL**

(71) Anmelder: **Kabel- und Lackdrahtfabriken GmbH,
Casterfeldstrasse 62-64, D-6800 Mannheim 24 (DE)**

(72) Erfinder: **Stietzel, Werner, Albanusstrasse 33,
D-6242 Kronberg (DE)**
Erfinder: **Hintermayer, Jochen, Dipl.-Ing.,
Prof.-Brix-Weg 13, D-2000 Hamburg 50 (DE)**

(74) Vertreter: **Schnabel, Hartmut, Dr.-Ing., Kabel- und
Lackdrahtfabriken GmbH Patentabteilung
Postfach 1265, D-6800 Mannheim 1 (DE)**

(54) Verfahren zur Montage eines Fahrdrahtes und geeigneter Fahrdraht hierzu.

(57) Die Erfindung betrifft ein Verfahren zur Montage eines Fahrdrahtes, insbesondere für elektrisch betriebene Schnellbahnen, sowie den Fahrdraht selbst. Der Fahrdraht weist zwei parallellaufende Komponenten auf, nämlich ein zugspannungsarmes stromführendes Schleifleitungsprofil insbesondere aus Kupfer, und ein Spannprofil aus einem hochzugfesten Werkstoff wie Stahl. Es wird zunächst das Spannprofil montiert und unter hohe Zugspannung gesetzt. Anschließend wird das Schleifleitungsprofil vor Ort einstückig und unmittelbar auf das Spannprofil formschlüssig aufgebracht, bevorzugt mittels Rollwerkzeug.

Das Spannprofil (10) hat im oberen Bereich ein übliches Rillenprofil (12) zur Verbindung mit dem Drahtsystem (30) und im mittleren Bereich beidseitig Einkerbungen (14) zur formschlüssigen Verbindung mit dem Schleifleitungsprofil (20), das vorzugsweise die Form eines elliptischen oder Kreis-Segmentes aufweist mit zwei seitlich angeformten Lappen (22).

KABEL- UND LACKDRAHTFABRIKEN GMBH
C A S T E R F E L D S T R.  62-64
6800  M A N N H E I M - NECKARAU

**KABEL+DRAHT**

K+D - 81806 EP
26. Okt.  1981

================================================================

# VERFAHREN ZUR MONTAGE EINES FAHRDRAHTES UND GEEIGNETER FAHRDRAHT HIERZU

================================================================

Die Erfindung betrifft ein Verfahren zur Montage eines
Fahrdrahtes sowie einen geeigneten Fahrdraht hierzu,
insbesondere für elektrisch betriebene Schnellbahnen,
wobei der Fahrdraht zwei parallellaufende Komponenten aufweist, nämlich ein zugspannungsarmes stromführendes Schleifleitungsprofil aus einem gutleitenden Werkstoff, insbesondere Kupfer oder einer Kupfer-Legierung, und ein Spannprofil aus einem hochzugfesten Werkstoff, insbesondere Stahl oder einer Titan-Legierung.

Bei Fahrgeschwindigkeiten im Bereich oberhalb 300 km/h wie sie heute für Eisenbahnen geplant·werden, treten im Fahrleitungssystem insbesondere in vertikaler Richtung eine recht erhebliche Schwingungen auf, die zu Funkenstrecken zwischen dem Fahrdraht und dem Strombügel der Elektrolokomotive führen und somit erheblichen Verschleiß verursachen können. Diese unerwünschten Schwingungen kann man z.B. dadurch dämpfen, daß man den Fahrdraht unter sehr hoher Zugspannung verlegt. In diesem Falle werden dann Werkstoffe für den Fahrdraht benötigt mit sehr hoher Festigkeit wie z.B. Legierungen aus Kupfer/ Beryllium oder mit einer Kupferschicht überzogener Stahl wie z.B. "Staku" (nach DIN).

Solche Werkstoffe haben allerdings den Nachteil, daß ihre Fertigungstechnologie sehr anspruchsvoll und demgemäß ihre Herstellung kostspielig und ihre Beschaffung schwierig ist. Darüber hinaus treten wegen der hohen Biegesteifigkeit dieser Werkstoffe bei der Montage des Fahrdrahtes erhebliche Probleme auf. In der DE-PS 536 656 ist ein Fahrdraht beschrieben, mit einem relativ harten Kernmetall aus Eisen oder Stahl mit hoher Zugfestigkeit, des ringsum von einem geschlossenen Mantel aus weicherem, gutleitendem Metall, wie Kupfer, umgeben ist. Hier ist im Ansatz der Versuch gemacht, die komplexen Anforderungen an einen Fahrdraht auf zwei Materialkomponenten mit verschiedenen Materialeigenschaften zu verteilen.

Noch deutlicher ist dieser Ansatz bei der DE-PS 535 464, wo Seile aus einem hochleitenden (relativ weichen) Werkstoff kombiniert sind mit einer Schleifleitung aus abriebfesterem Werkstoff, wobei diese Schleifleitung leicht auswechselbar und aus einzelnen Stücken bestehen soll. Die Herstellung der Schleifleitung aus einzelnen Stücken sollte die Montage erleichtern und einer übermäßigen Versteifung der Fahrleitung entgegenwirken. Es wird zunächst das Seil verlegt und gespannt. Dann werden die einzelnen Stücke der Schleifleitung an das eigentliche hochleitende Fahrseil durch eine Vielzahl von Klemmstücken in montageintensiver Weise angebracht.

Die Nachteile der letztgenannten Fahrdraht-Ausbildung selbst liegen - abgesehen von der dort nicht vorgesehen Verwendung eines hochzugfesten Materials - darin, daß das Gesamtgewicht des kombinierten Fahrdrahtes zu schwer und damit das erforderliche Tragsystem zu teuer wird. Im übrigen ist die dort genannte Materialauswahl und vielstückige Ausbildung der Schleifleitung für einen Hochgeschwindigkeits-Fahrdraht ebenfalls nicht geeignet.

Der Erfindung liegt die Aufgabe zugrunde, den Stand der Technik unter Vermeidung der oben angedeuteten Nachteile zu verbessern und ein Verfahren zur Montage eines Fahrdrahtes sowie den hierzu geeigneten Fahrdraht selbst in

0056097

solcher Weise bereitzustellen, daß eine Hochgeschwindigkeits-Fahrleitung mit sehr geringer Schwingung resultiert, welche in Folge mäßigen Gewichtes auf herkömmliche Fahrleitungs- bzw. Tragsysteme anwendbar und leicht montierbar ist, und daß die dem Abrieb unterliegende Schleifleitungskomponente möglichst auswechselbar ausgestaltet ist ohne eine Abspannung der unter hoher Spannung stehenden Tragkomponente erforderlich zu machen.

Diese Aufgabe wird im Falle eines Verfahrens der eingangs genannten Art nach der Erfindung dadurch gelöst, daß an das Fahrleitungssystem zunächst das Spannprofil in an sich bekannter Weise montiert und unter die für die geringe Schwingungsamplitude erforderliche hohe Zugspannung gesetzt wird, worauf das Schleifleitungsprofil vor Ort einstückig (in bezug auf die jeweilige Abspannlänge) und unmittelbar auf das Spannprofil formschlüssig aufgebracht wird, vorzugsweise mittels eines Rollwerkzeuges.

Bei einer bevorzugten Ausführungsform der Erfindung, kann das Schleifleitungsprofil kontinuierlich von einer auf einem Gleismontagewagen befindlichen Trommel oder dgl. abgewickelt und von einer ersten Rolle des Werkzeuges umgelenkt und durch weitere Rollen an das Spannprofil angedrückt und mit diesem formschlüssig verbunden werden.

In den meisten Fällen ist es von Vorteil, entsprechend gestaltete, für die formschlüssige Verbindung geeignete Profile zu verwenden. Eine kostengünstigere, allerdings unter technischen Gesichtspunkten nicht ganz so befriedigende noch im Rahmen der Erfindung liegende Ausführungsform geht dahin, daß unter Verwendung einfacherer Formen das Schleifleitungsprofil ggf. ohne formschlüssige Verbindung an das Spannprofil von unten mittels Kleben, Löten oder auch Schweißen erfolgt.

In Verbindung hiermit kann ein abschnittsweise erfolgendes Festklemmen schon aus Sicherheitsgründen vorteilhaft sein, doch ist dies nicht in jedem Falle erforderlich. Sowohl im Falle der formschlüssigen sich über die ganze Länge erstreckende Verbindung als auch im Falle einer Verbindung durch Kleben oder Löten oder dgl. kann eine rasche Demontage insbesondere mittels Aufkeilen möglich sein, so daß ohne großen Aufwand das abgenutzte Schleifleitungsprofil durch ein neues ohne Abspannen des Tragseiles über die jeweilige gesamte Abspannstrecke ersetzbar ist.

Bei der Gestaltung des Fahrdrahtes zur Verwendung für das erfindungsgemäße Verfahren wird von zwei parallellaufenden Komponenten, nämlich einem zugspannungsarmen stromführenden Schleifleitungsprofil aus einem gutleitenden Werkstoff wie z.B. E-Kupfer, F-20 oder F-37 (nach DIN) ausgegangen und einem Spannprofil aus einem hochzugfesten Werkstoff, insbesondere aus Stahl oder einer Titan-Legierung.

Die erfindungsgemäße Weiterbildung des Fahrdrahtes besteht darin, daß das Spannprofil im oberen, dem Fahrleitungs- bzw. Tragsystem zugewandten Bereich ein übliches Klemm- bzw. Rillenprofil zur Verbindung mit dem Tragsystem und im mittleren Bereich beidseitig Einkerbungen aufweist zur unmittelbaren formschlüssigen Verbindung mit dem unterhalb des Spannprofiles vorgesehenen Schleifleitungsprofil.

Die Profilierungen bzw. Einkerbungen können sich, insbesondere wenn das Profil im Strangpress- oder Ziehverfahren hergestellt ist, über die gesamte Länge des Spannprofiles bzw. des Schleifleitungsprofiles erstrecken, so daß die formschlüssige Verbindung über die gesamte Fahrleitungslänge gegeben ist.

Grundsätzlich ist es jedoch auch möglich, daß diese formschlüssige Verbindung bzw. die hierfür erforderliche Einkerbung nicht durchgehend, sondern nur in Abständen erfolgt.

Weitere erfindungsgemäße Ausgestaltungen des Fahrdrahtes und seiner Komponenten sind in den Unteransprüchen gekennzeichnet.

Zwar ist es bereits bekanntgeworden in Verbindung mit Fahrdrahtabschnitten einen Kupferwulst auf ein T-Profil, das auch aus einem anderen Material sein kann, aufzuwalzen (vgl. DE-PS 959 831). Jedoch handelt es sich dort um Fahrdrahtabschnitte, die nicht unter Zugspannung stehen und denen nicht eine mit dem vorliegenden Gegenstand vergleichbare Aufgabe zugrunde liegt. Auch wird der Kupferwulst so aufgewalzt, daß nach seiner Abnutzung das ganze Profil ausgewechselt werden muß. Eine Anregung in Richtung des erfindungsgemäßen Fahrdrahtes und seiner spezifischen Gestaltung ist daher nicht zu entnehmen.

Im folgenden wird die Erfindung anhand eines Ausführungsbeispieles näher beschrieben, aus dem sich weitere Merkmale und Vorteile der Erfindung entnehmen lassen.

Fig. 1     zeigt die Durchführung des erfindungsgemäßen Verfahrens mittels Montagewagen;

Fig. 2     zeigt einen senkrechten Querschnitt durch den fertiggestellten Fahrdraht;

Fig. 3     zeigt einen senkrechten Querschnitt durch das Schleifleitungsprofil im vorgefertigten (nicht montierten) Zustand.

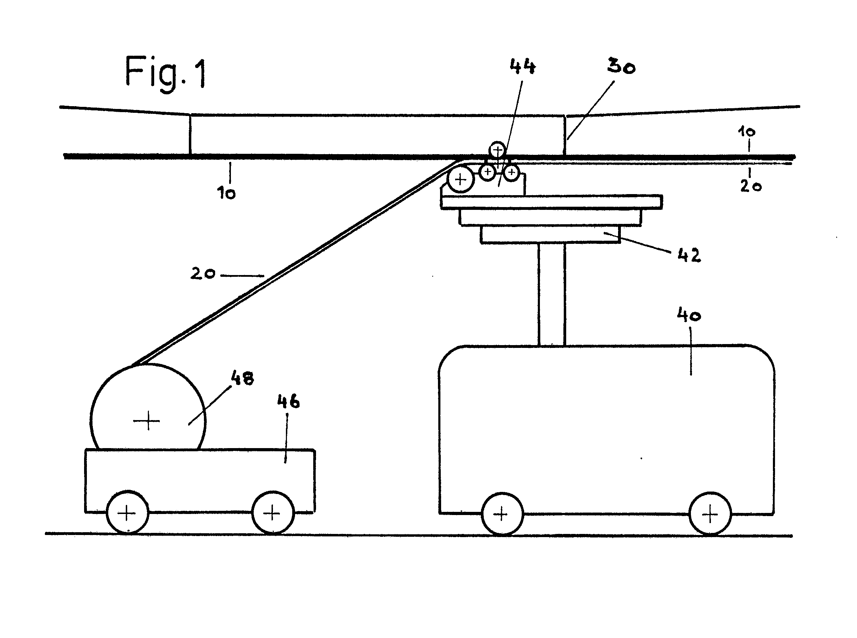

Figur 1 zeigt eine Durchführungsform des erfindungsgemäßen Verfahrens, wobei der eigentliche Montagewagen 40 eine hydraulisch  höhenverstellbare Arbeitsbühne 42 aufweist, auf welcher das Rollwerkzeug 44 montiert bzw. abstützt sein kann. Grundsätzlich kann das Montage-Werkzeug zum formschlüssigen Verbinden des Schleifleitprofiles 20 mit dem Spannprofil 10 auch ohne Abstützung auf der Arbeitsbühne arbeiten. Es weist vorzugsweise eine Umlenkrolle im vorderen der Trommel 48 zugewandten Teil auf sowie seitlich je mindestens zwei Anpressrollen, um das in aufgespreizter Form vorliegende Schleifleitungsprofil 20 entsprechend anpressen zu können. Oberhalb des Fahrdrahtes ist  mindestens eine Gegenrolle vorzusehen. Während der weitgehend kontiniuierlich möglichen Montage wird das vorgefertigte Schleifleitungsprofil 20 von der Trommel 48 abgezogen, die ihrerseits entweder auf dem Montagewagen 40 gelagert ist oder einem zweiten vor diesem geführten Wagen 46.

Es versteht sich, daß im Falle eines Anklebens oder Anlötens eine entsprechend variierte Durchführungsform zu wählen und die Arbeitsbühne mit dem entsprechenden Werkzeug auszustatten ist.

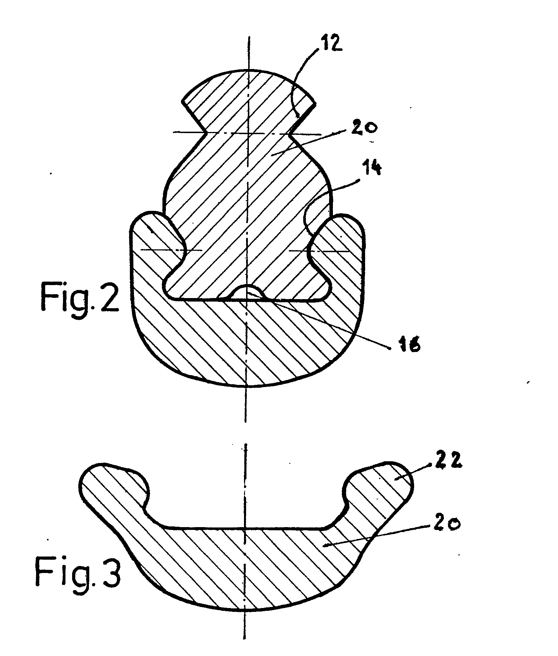

Figur 2 zeigt einen senkrechten Querschnitt durch den fertiggestellten Fahrdraht. Wie ersichtlich ist das in Figur 3 im vorgefertigten Zustand gezeigte Schleifleitungsprofil nunmehr formschlüssig mit dem Spannprofil 10 verbunden infolge Um- und Anrollens der beiden Lappen 22 in die entsprechend geformten Kerben 14 des Spannprofiles. Die Kerbe 16 ist in der unteren Fläche des Spannprofiles 10 so angebracht, daß ein Durchtrennen des später abgenutzten Schleifleitungsprofiles 20 entlang der gezeichneten Mittel-Linie z.B. mittels einer rotierenden Säge möglich ist, wonach die beiden Hälften des Schleifleitungsprofils leicht entfernt werden können. Genauso ist es jedoch möglich mit einem auf der Arbeitsbühne entsprechend montierten Keil das Schleifleitungsprofil 20 später vom Spannprofil 10 zu trennen. Im oberen Teil zeigt das Spannprofil 10 ein übliches Rillenprofil 12.

In Figur 3 sieht man einen senkrechten Querschnitt durch das Schleifleitungsprofil im vorgefertigten, also nicht montierten Zustand. Das Schleifleitungsprofil 20 weist links und rechts einen Lappen 22 auf. Je nach Fertigung und Material ist es denkbar, daß das vormontierte Schleifleitungsprofil 20 in einer noch etwas flacheren Gestaltung vorliegt als gezeichnet, so daß ein verhältnismäßig raumsparendes Aufwickeln auf eine Trommel möglich ist.

KABEL- UND LACKDRAHTFABRIKEN GMBH

C A S T E R F E L D S T R.  62-64

6800  M A N N H E I M - NECKARAU

**KABEL+DRAHT**

K+D - 81806 EP
26. Okt. 1981

====================================================

# VERFAHREN ZUR MONTAGE EINES FAHRDRAHTES UND GEEIGNETER FAHRDRAHT HIERZU .

====================================================

## PATENTANSPRÜCHE

1.  Verfahren zur Montage eines Fahrdrahtes, insbesondere für elektrisch betriebene Schnellbahnen, wobei der Fahrdraht zwei parallellaufende Komponenten aufweist, nämlich ein zugspannungsarmes stromführendes Schleifleitungsprofil aus einem gutleitenden Werkstoff, insbesondere Kupfer oder einer Kupfer-Legierung, und
ein Spannprofil aus einem hochzugfesten Werkstoff,
insbesondere Stahl oder einer Titan-Legierung,
d a d u r c h   g e k e n n z e i c h n e t,
daß an das Fahrleitungssystem zunächst das Spannprofil in an sich bekannter Weise montiert und
unter die für die geringe Schwingungsamplitude erforderliche hohe Zugspannung gesetzt wird, worauf
das Schleifleitungsprofil vor Ort einstückig (in
bezug auf die jeweilige Abspannlänge) und unmittelbar auf das Spannprofil formschlüssig aufgebracht
wird.

2. Verfahren nach Anspruch 1,   d a d u r c h
g e k e n n z e i c h n e t,   daß das Schleifleitungsprofil auf das Spannprofil mittels Rollwerkzeug aufgebracht wird.

3. Verfahren nach Anspruch 1 oder 2,
d a d u r c h   g e k e n n z e i c h n e t,
daß das Schleifleitungsprofil kontinuierlich von
einer auf einem Gleismontagewagen befindlichen
Trommel oder dgl. abgewickelt und von einer ersten
Rolle des Werkzeugs umgelenkt und durch weitere
Rollen an das Spannprofil angedrückt und mit diesem
formschlüssig verbunden wird (Fig. 1).

0056097

4. Verfahren nach einem oder mehreren der vorhergehenden Ansprüche, d a d u r c h
g e k e n n z e i c h n e t, daß zusätzlich
oder an Stelle des formschlüssigen Aufbringens
die Verbindung zwischen Spannprofil und Schleifleitungsprofil durch Kleben oder Löten erfolgt.

5. Verfahren nach einem oder mehreren der vorhergehenden Ansprüche, d a d u r c h
g e k e n n z e i c h n e t, daß vor Aufbringung des Schleifleitungsprofils auf das
Spannprofil ein früher aufgebrachtes und abgenutztes Schleifleitungsprofil entfernt wird,
insbesondere mittels Aufkeilen.

6. Fahrdraht zur Verwendung für das Verfahren nach
einem oder mehreren der Ansprüche 1 bis 5, mit
zwei parallellaufenden Komponenten, nämlich
einem zugspannungsarmen stromführenden Schleifleitungsprofil aus einem gutleitenden Werkstoff,
und einem Spannprofil aus einem hochzugfesten
Werkstoff, d a d u r c h g e k e n n -
z e i c h n e t, daß das Spannprofil (10) im
oberen, dem Fahrleitungs- bzw. Tragsystem (30)
zugewandten Bereich ein übliches Klemm- bzw.
Rillenprofil (12) zur Verbindung mit dem Tragsystem (30) und im mittleren Bereich beidseitig
Einkerbungen (14) aufweist zur unmittelbaren
formschlüssigen Verbindung mit dem unterhalb des
Spannprofiles vorgesehenen Schleifleitungsprofil (20).

0056097

- 4 -    81806 EP

7. Fahrdraht nach Anspruch 6, d a d u r c h g e k e n n z e i c h n e t, daß die Profilierungen bzw. Einkerbungen sich über die gesamte Länge des Spannprofiles erstrecken.

8. Fahrdraht nach Anspruch 6 oder 7, d a d u r c h g e k e n n z e i c h n e t, daß das Spannprofil (10) im unteren an das Schleifleitungsprofil (20) angrenzenden Bereich etwa mittig eine weitere nach oben verlaufende Einkerbung (16) aufweist.

9. Fahrdraht nach einem oder mehreren der Ansprüche 6 bis 8, d a d u r c h g e k e n n - z e i c h n e t, daß das Spannprofil (10) aus einem korrosionsfesten Material besteht oder einen Überzug aus einem solchen aufweist.

10. Fahrdraht nach einem oder mehreren der Ansprüche 6 bis 9, d a d u r c h g e k e n n - z e i c h n e t, daß das auf das Spannprofil (10) aufgebrachte Schleifleitungsprofil (20) im vorgefertigten Zustand im wesentlichen die Form eines elliptischen oder Kreis-Segmentes aufweist mit zwei seitlich angeformten Lappen (22), deren Form an die seitlich angebrachten Kerben (14) des Spannprofiles (10) angepaßt ist.

11. Schleifleitungsprofil nach Anspruch 10, d a d u r c h g e k e n n z e i c h n e t, daß die Duktilität des Werkstoffes ein Aufrollen des Schleifleitungsprofils auf das Spannprofil unter Verformung ermöglicht.

Fig. 1

Fig.2

Fig.3